# EUROPÄISCHE PATENTSCHRIFT

(11) **EP 3 853 185 B1**
(45) Veröffentlichungstag und Bekanntmachung des Hinweises auf die Patenterteilung: **29.04.2026**
(21) Anmeldenummer: 19773763.8
(22) Anmeldetag: 17.09.2019
(51) Int. Cl.: C04B 18/167, C04B 7/24, B03B 9/06

(54) **VERFAHREN UND ANLAGE ZUM AUFBEREITEN VON MATERIAL, DAS ZEMENTSTEIN ENTHÄLT**
METHOD AND FACILITY FOR PRODUCING MATERIAL CONTAINING HYDRATED CEMENT
PROCÉDÉ ET SYSTÈME POUR TRAITER UN MATÉRIAU QUI CONTIENT DU CIMENT

(30) Priorität: 20.09.2018 DE 102018123115
(43) Veröffentlichungstag der Anmeldung: 28.07.2021
(73) Patentinhaber: thyssenkrupp Polysius GmbH, 59269 Beckum (DE); thyssenkrupp AG, 45143 Essen (DE)
(72) Erfinder: WILLMS, Eike, 44309 Dortmund (DE); KACHE, Guido, 59269 Beckum (DE); LEMKE, Jost, 59320 Ennigerloh (DE)
(74) Vertreter: thyssenkrupp Intellectual Property GmbH
(86) Internationale Anmeldenummer: PCT/EP2019/074827
(87) Internationale Veröffentlichungsnummer: WO 2020/058247

(56) Entgegenhaltungen:
- EP-A1- 2 895 436
- EP-A1- 3 498 681
- WO-A1-2014/154741
- JP-A- H07 315 895
- JP-B2- 3 543 934

## Beschreibung

Die Erfindung betrifft ein Verfahren und eine Anlage zum Aufbereiten von Material, das Zementstein enthält.

Bei dem Material kann es sich insbesondere um einen festen Abfallstoff, wie beispielsweise ein Betonrezyklat, handeln, das bei Abbruchaktivitäten angefallen ist. Ein solches Betonrezyklat enthält sogenannten Zementstein, d.h. ausgehärteten Zementleim, der wiederum eine Mischung aus Zement und Wasser ist. Zementleim bildet die Basis für Beton oder auch Mörtel, wobei diesem üblicherweise noch Gesteinskörner, der sogenannte Zuschlag, insbesondere Sand und/oder Kies, beigemischt wird.

Zement wird durch ein Feinmahlen von Zementklinker gewonnen. Zur Herstellung von Zementklinker werden Zement-Rohstoffe, insbesondere Kalkstein und Ton sowie mögliche Korrekturmaterialien, wie beispielsweise Quarzsand und eisenoxidhaltige Materialien, zu Rohmehl gemahlen, anschließend kalziniert sowie durch Brennen in einem Klinkerofen gesintert. Bei der Kalzination wird der Kalkstein entsäuert, wobei CO₂ ausgetrieben wird.

Der beispielsweise in Beton enthaltene Zementstein wird während der Nutzung des Betons langsam durch in der Umgebungsluft enthaltenes CO₂ rekarbonatisiert, allerdings nur anteilig, üblicherweise in einer Größenordnung von etwa 25% bis 30%.

Der nicht rekarbonatisierte Anteil des Zementsteins weist ein erhebliches Rekarbonatisierungspotential auf, das durch geeignete Aufbereitungsschritte erschlossen werden kann. Das Rekarbonatisierungspotential ist insofern von Bedeutung, als dass der Zementstein CO2 einbinden und damit immobilisieren kann.

Forschungsprojekte, die sich mit einer Rekarbonatisierung von Zementstein beschäftigen, sind in folgenden Veröffentlichungen beschrieben:
- Seidemann, M. et al. "CO2-Einbindung in Betonrezyklaten", (Tagungsbeitrag: Papers zur Fachtagung Recycling R' 13, 19/20. September 2013),
- Bericht zur Studie "Rohstoffversorgung und Ressourcenproduktivität in der deutschen Zementindustrie" durchgeführt von der Wuppertal Institut für Klima, Umwelt, Energie GmbH, Wuppertal, Abschluss im Oktober 2015,
- Abschlussbericht über ein Entwicklungsprojekt, gefördert unter dem Aktenzeichen 23689/02 von der Deutschen Bundesstiftung Umwelt, mit dem Titel "Weiterentwicklung der Karbonatisierung von rezyklierten Zuschlägen aus Altbeton (2. Phase: Prozessoptimierung im Labormaßstab und Technologieentwurf), vom 30. November 2015.

Bislang werden Betonrezyklate in größerem Umfang lediglich zu minderwertigeren Produkten verarbeitet und beispielsweise als Schotterersatz verwendet oder diese werden deponiert.

Eine Schwierigkeit hinsichtlich einer höherwertigen Verwendung von Betonrezyklaten liegt darin, den Zementstein möglichst sortenrein zurückzugewinnen, denn Zementstein ist in Betonrezyklaten, abhängig auch von deren Aufbereitungsgraden, üblicherweise nur in einem relativ geringen Anteil von zwischen 15% und 20% enthalten. Zudem ist Zementstein mit anderen im Beton enthaltenen Gesteinen üblicherweise fest verbunden. Werden Betonrezyklate zur Aufbereitung zerkleinert, führt dies häufig dazu, dass die Bruchvorgänge nichtselektiv, d.h. nicht an den Grenzen zwischen Zementstein und den anderen Gesteinssorten, ablaufen. Eine nicht-selektive Zerkleinerung führt dazu, dass die in den Betonrezyklaten enthaltenen Gesteine nicht oder nur in einem geringen Umfang sortenrein zurückgewonnen werden können. Damit sind alle Prozesse, bei denen eine relativ feine Mahlung einer Rekarbonatisierung vorgeschaltet ist, aus technologischer Sicht als weniger effizient zu charakterisieren.

Die EP 2 895 436 B1 offenbart ein Verfahren zur Herstellung von Zuschlag sowie von Kalziumcarbonat aus Beton-Gesteinskörnung mit folgenden Verfahrensschritten:
- Einbringen von Schüttgut, das Beton-Gesteinskörnung umfasst und das eine Korngröße von 2 bis 20 mm aufweisen kann, in einen Reaktionsraum;
- Zuleiten eines Kohlenstoffdioxid umfassenden Gases in den Reaktionsraum;
- Zerkleinern des Schüttguts in dem Reaktionsraum, was insbesondere abrasiv erfolgen kann;
- Reagierenlassen der Beton-Gesteinskörnung und des Kohlenstoffdioxid umfassenden Gases miteinander zu Reaktionsprodukten in dem Reaktionsraum;
- Ausbringen der Reaktionsprodukte aus dem Reaktionsraum.

Die DE 197 38 471 A1 beschreibt eine Betonrecyclinganlage zur Wiederaufbereitung von Restbeton aus nicht verbrauchten Frischbetonresten sowie aus Rückständen, die bei der Reinigung von Betonherstellungs- und Betontransporteinrichtungen angefallen sind. Dabei erfolgt ein Auswaschen von festen Bestandteilen aus dem Restbeton unter Zusatz von Spülwasser und deren Klassierung in einem Klassiersieb.

Aus der WO 2014/154741 A1 ist die Rückgewinnung von aggregiertem und pulverförmigen Material aus Abrissgut bekannt.

Die JP354393 offenbart ein Verfahren zur Entfernung von Zuschlagstoffen aus Altbeton. Nach Entfernen der Zuschlagstoffe wird der Zementstein gemahlen, mit Wasser vermischt und die Mischung wird carbonatisiert.

Der Erfindung lag die Aufgabe zugrunde, eine Möglichkeit aufzuzeigen, ein Material, das Zementstein enthält, insbesondere ein Betonrezyklat, hochwertig aufzubereiten, wobei der Zementstein rekarbonatisiert und möglichst sortenrein von anderen in dem Material enthaltenen Gesteinen zurückgewonnen werden soll.

Diese Aufgabe wird durch ein Verfahren gemäß dem Patentanspruch 1 sowie durch eine zur Durchführung eines solchen Verfahrens geeignete Anlage gemäß dem Patentanspruch 14 gelöst. Vorteilhafte Ausführungsformen des erfindungsgemäßen Verfahrens und bevorzugte Ausgestaltungsformen der erfindungsgemäßen Anlage sind Gegenstände der weiteren Patentansprüche und/oder ergeben sich aus der nachfolgenden Beschreibung der Erfindung.

Erfindungsgemäß ist ein Verfahren zum Aufbereiten von Material, das Zementstein enthält, vorgesehen, wobei das Material in einer ersten Zerkleinerungsvorrichtung (vor-)zerkleinert und anschließend einem Reaktor zugeführt wird, in dem das Material mit einer wässrigen Flüssigkeit und CO₂ vermischt und in dem eine Mischungsbewegung des Materials erzeugt wird, wobei das aus dem Reaktor entnommene Material mittels einer Klassiervorrichtung in mindestens zwei Fraktionen, eine Grobfraktion und eine Mittelfraktion, aufgeteilt wird, wobei die Grobfraktion eine Korngröße größer 16 mm aufweist, wobei die Mittelfraktion eine Korngröße zwischen 2 mm und 16 mm aufweist, wobei die Temperatur und der Druck in dem Reaktor derart beeinflusst werden, dass ein Überdruck im Vergleich zu dem atmosphärischen Druck und eine Temperatur, die größer als 100 °C ist, eingestellt werden, **dadurch gekennzeichnet,** dass von den mindestens zwei Fraktionen, die Grobfraktion in den Reaktor zurückgeführt wird, wobei die Grobfraktion vor der Rückführung in den Reaktor, in einer zweiten Zerkleinerungsvorrichtung zerkleinert wird.

Eine erfindungsgemäße, zur Durchführung eines solchen Verfahrens geeignete Anlage umfasst zumindest
- eine erste Zerkleinerungsvorrichtung zur Zerkleinerung des Materials,
- einen materialführend mit der ersten Zerkleinerungsvorrichtung verbundenen Reaktor, der eine Mischvorrichtung umfasst,
- eine fluidleitend mit dem Reaktor verbundene Flüssigkeitszufuhr für eine wässrige Flüssigkeit,
- eine fluidleitend mit dem Reaktor verbundene Gaszufuhr für CO2 und
- eine materialführend mit dem Reaktor verbundene Klassiervorrichtung zum Aufteilen des Materials in mindestens zwei Fraktionen, die sich hinsichtlich der Korngröße unterscheiden, eine Grobfraktion und eine Mittelfraktion, wobei die Grobfraktion eine Korngröße größer als 16 mm aufweist, wobei die Mittelfraktion eine Korngröße zwischen 2 mm und 16 mm aufweist,
- eine Temperiervorrichtung zur Beeinflussung einer Temperatur in dem Reaktor
- einer Durckbeeinflussungsvorrichtung zur Beeinflussung des Drucks in dem Reaktor
- eine Materialrückführleitung zum Rückführen zumindest einer der Fraktionen von der Klassiervorrichtung zu dem Reaktor, wobei in die Materialrückführleitung eine zweite Zerkleinerungsvorrichtung integriert ist.

Ein Kernaspekt des erfindungsgemäßen Verfahrens ist die Vermischung beziehungsweise das in Kontakt Bringen des vorzerkleinerten Materials mit (dem in der wässrigen Flüssigkeit enthaltenen) Wasser und dem CO2 in dem Reaktor, womit eine Rekarbonatisierung des Zementsteins erzielt werden kann. Dabei laufen die nachfolgend angegebenen Reaktionen ab:

C-S-H + CO2 → CaCO3+SiO2+H2O

CaOH+CO2 → CaCO3+H2O.

Dabei scheint die Reaktion von CaOH mit CO2 solange zu dominieren, wie CaOH zur Verfügung steht. Erst wenn die Verfügbarkeit von CaOH eingeschränkt ist, beginnt die Zersetzung der Calciumsilicathydratphasen (CSH-Phasen).

Eine Umwandlung des CaOH des Zementsteins führt bei Weiterverwendung der Fraktionen zu einer erheblichen Verbesserung der Eigenschaften der Gesteine; dies gilt beispielsweise, wenn diese zumindest teilwiese in neuen Betonen eingesetzt werden sollen. Insbesondere nimmt die Porosität des Zementsteins nach einer Carbonatisierung des CaOH ab, womit im Wesentlichen alle Parameter für die Verarbeitbarkeit verbessert werden können.

Infolge der Behandlung des Materials in dem Reaktor verringert sich auch die Festigkeit des Zementsteins. Dies gilt insbesondere bei einer Behandlung bei oberhalb der Umgebungstemperatur liegenden Temperaturen, wobei die dazu einzustellenden Temperaturen auch druckabhängig sein können. Bei atmosphärischem Druck innerhalb des Reaktors kann vorzugsweise eine Temperatur zwischen 50°C und 100°C eingestellt werden. Erfindungsgemäß werden dagegen zumindest zeitweise ein Überdruck (im Vergleich zu dem atmosphärischen Druck) und eine Temperatur innerhalb des Reaktors, die größer als 100°C ist, eingestellt. Im Rahmen eines erfindungsgemäßen Verfahrens ist es daher vorgesehen, dass die Temperatur und der Druck in dem Reaktor entsprechend beeinflusst werden. Eine erfindungsgemäße Anlage umfasst hierzu eine entsprechende Temperiervorrichtung, mittels der eine Temperatur innerhalb des Reaktors nach oben oder nach unten beeinflussbar ist, und eine Druckbeeinflussungsvorrichtung, mit der zumindest auch ein Überdruck innerhalb des Reaktors erzeugt werden kann,. Eine Beeinflussung der Temperatur in dem Reaktor kann dabei durch eine entsprechende Temperierung des Reaktors selbst und/oder des dem Reaktor zuzuführenden Materials und/oder der dem Reaktor zuzuführenden wässrigen Flüssigkeit und/oder des dem Reaktor zuzuführenden CO2-Gasstroms erfolgen. Bevorzugt kann eine Temperierung zumindest auch der wässrigen Flüssigkeit vorgesehen sein, was prozesstechnisch vorteilhaft umsetzbar ist.

Die verringerte Festigkeit des Zementsteins kann im Rahmen eines weiteren Kernaspekts des erfindungsgemäßen Verfahrens, nämlich der Erzeugung einer Mischungsbewegung in dem Reaktor, ausgenutzt werden, um durch einen regelmäßigen Kontakt der vorgebrochenen Bruchstücke miteinander sowie gegebenenfalls auch mit die Mischungsbewegung bewirkenden Mischungselementen der Mischvorrichtung einer erfindungsgemäßen Anlage eine weitere Zerkleinerung der Bruchstücke zu realisieren. Dabei wird infolge der gezielten Verringerung der Festigkeit des Zementsteins insbesondere auch eine Zerkleinerung der Bruchstücke erreicht, die selektiv ist, so dass die Bruchvorgänge insbesondere an den Grenzen zwischen Zementstein und den anderen Gesteinssorten ablaufen. Insbesondere kann durch den intensiven Kontakt der Bruchstücke untereinander ein sehr feinkörniger Abrieb erzeugt werden, der primär aus Zementstein gebildet ist.

Dieser sehr feinkörnige Abrieb kann in vorteilhafter Weise separiert werden, indem ein Entnahmestrom der wässrigen Flüssigkeit, in der der Abrieb in Form von Schwebepartikeln enthalten ist, dem Reaktor entnommen und anschließend mittels einer entsprechenden Separiervorrichtung aus dem Entnahmestrom separiert wird. Der Entnahmestrom der wässrigen Flüssigkeit kann anschließend, dann als Rezirkulationsstrom, in den Reaktor zurückgeführt werden, wodurch der Verbrauch an wässriger Flüssigkeit bei der Durchführung eines erfindungsgemäßen Verfahrens gering gehalten werden kann.

Erfindungsgemäß wird das Material vor dem Einbringen in den Reaktor vorgebrochen, vorzugsweise zu Bruchstücken, deren größte Abmessungen bis zu einem beliebig definierten Wert zwischen 32 mm und 63 mm betragen können, was durch eine entsprechende Auswahl und einen darauf ausgerichteten Betrieb der (ersten) Zerkleinerungsvorrichtung eingestellt werden kann. Gegenüber einer Zerkleinerung beziehungsweise einem Vorbrechen mit einem kleineren oberen Grenzwert für die jeweilige größte zulässige Abmessung der Bruchstücke zeichnet sich ein erfindungsgemäß vorgesehenes relativ grobes Vorbrechen durch einen geringen Energiebedarf aus.

Weiterhin ist erfindungsgemäß vorgesehen, dass das Material nach der Behandlung in dem Reaktor mittels der Klassiervorrichtung in mindestens zwei, vorzugsweise mindestens oder exakt drei Fraktionen aufgeteilt wird. Dabei kann vorzugsweise vorgesehen sein, dass eine Grobfraktion in den Reaktor zurückgeführt wird, weil deren Korngröße zu groß für eine Wiederverwertung sein kann und/oder weil bei einer derart großen Korngröße nicht von einer ausreichend sortenreinen (Grob-)Fraktion ausgegangen werden kann. Eine erfindungsgemäße Anlage kann dazu eine entsprechende Materialrückführleitung umfassen.

Die oder zumindest eine der anderen Fraktionen, die bei mehr als zwei Fraktionen vorzugsweise mittelgroß ist und folglich nachfolgend als Mittelfraktion bezeichnet wird, kann Korngrößen in einem Bereich aufweisen, der eine vorteilhafte Weiterverwendung ermöglicht und/oder bei dem von einer ausreichend sortenreinen Fraktion ausgegangen werden kann. Im Rahmen eines erfindungsgemäßen Verfahrens kann eine solche Fraktion daher ausgeschleust werden, d.h. es erfolgt im Rahmen eines erfindungsgemäßen Verfahrens keine Weiterverarbeitung dieser Fraktion mehr. Insbesondere kann es sich bei dieser Fraktion um ein Fertigprodukt handeln, das nicht mehr mit dem Ziel einer Veränderung weiterbehandelt werden soll, sondern unverändert als beispielsweise Zuschlagstoff Verwendung finden kann.

Vorzugsweise kann vorgesehen sein, dass Bruchstücke des Materials, deren Korngrößen größer als 16 mm sind (Grobfraktion), im Rahmen eines erfindungsgemäßen Verfahrens in den Reaktor zurückgeführt werden. Sofern die Bruchstücke des Materials mittels der Klassiervorrichtung in mehr als zwei und insbesondere in exakt drei Fraktionen separiert werden, kann weiterhin bevorzugt vorgesehen sein, dass die Korngrößen der oder einer Mittelfraktion zwischen 2 mm und 16 mm betragen. In diesem Fall kann folglich auch eine Feinfraktion mittels der Klassiervorrichtung separiert werden, deren Korngrößen kleiner als 2 mm sind. Auch eine solche Feinfraktion kann vorzugsweise ausgeschleust werden, wobei vorgesehen sein kann, die Feinfraktion für eine Wiederverwendung vorzusehen. Bei einer Aufbereitung von Betonrezyklat kann es sich bei seiner solchen Feinfraktion insbesondere um weitgehend sortenreinen Sand handeln, der vorteilhaft wiederverwertbar ist. Sofern die Feinfraktion für eine Wiederverwendung ungeeignet ist, kann deren Deponierung vorgesehen sein.

Gegebenenfalls kann es auch sein, dass eine mittels der Klassiervorrichtung separierte Fraktion, insbesondere die genannte Mittelfraktion, deren Korngrößen vorzugsweise zwischen 2 mm und 16 mm betragen, nicht oder nicht immer ausreichend sortenreinen ist. Um dies ermitteln zu können, kann vorgesehen sein, dass diese Fraktion hinsichtlich des Gehalts an Zementstein analysiert wird. Weiterhin bevorzugt kann dann noch vorgesehen sein, dass diese Fraktion in den Reaktor zurückgeführt wird, wenn der ermittelte Gehalt an Zementstein größer als ein diesbezüglich definierter Grenzwert ist. Der entsprechende Anteil dieser Fraktion kann dann erneut innerhalb des Reaktors behandelt werden, so dass nach einem erneuten Separieren in der Klassiervorrichtung die Qualitätsanforderungen an diesen erfüllt werden. Eine erfindungsgemäße Anlage kann eine entsprechende Analysevorrichtung und eine entsprechende Materialrückführleitung umfassen.

Um eine möglichst schnelle/weitgehende Zersetzung der für den Zementstein festigkeitsgebenden Calciumsilicathydratphasen (CSH-Phasen) zu erreichen, kann vorzugsweise vorgesehen sein, dass in den Reaktor ein basischer Zuschlagstoff (z.B. NaOH) eingebracht wird. Dadurch kann der pH-Wert bei der Reaktion in dem Reaktor kontrolliert eingestellt werden. Eine erfindungsgemäße Anlage kann dazu eine entsprechende Eintragsvorrichtung für einen solchen basischen Zuschlagstoff umfassen.

Eine besonders gute Durchmischung des Materials mit der wässrigen Flüssigkeit und mit dem CO2 kann im Rahmen eines erfindungsgemäßen Verfahrens erreicht werden, wenn das Material in dem Reaktor von der wässrigen Flüssigkeit und dem CO2 im Gegenstrom durchströmt wird. Der Reaktor einer erfindungsgemäßen Anlage kann hierzu vorzugsweise ein erstes Ende aufweisen, dem ein Materialeinlass zum Einbringen des Materials in den Reaktor, ein Flüssigkeitsauslass zum Ausbringen von wässriger Flüssigkeit aus dem Reaktor sowie ein Gasauslass zum Ausbringen von CO2 aus dem Reaktor zugeordnet ist. Weiterhin kann ein solcher Reaktor ein vorzugsweise dem ersten Ende gegenüberliegendes, zweites Ende aufweisen, dem ein Materialauslass zum Ausbringen des Materials aus dem Reaktor, ein Flüssigkeitseinlass zum Einbringen der wässrigen Flüssigkeit in den Reaktor sowie ein Gaseinlass zum Einbringen des CO2 in den Reaktor zugeordnet ist. Vorzugsweise kann vorgesehen sein, dass der Reaktor als Vertikalreaktor ausgebildet ist, so dass dieser, bezogen auf die Gravitationsrichtung, an dem oben liegenden, ersten Ende den Materialeinlass, den Flüssigkeitsauslass und den Gasauslass sowie an dem unten liegenden, zweiten Ende den Materialauslass, den Flüssigkeitseinlass und den Gaseinlass umfasst.

Der Flüssigkeitseinlass und der Gaseinlass können auch integral ausgebildet sein, so dass dann die wässrige Flüssigkeit und das CO2 vor dem Einbringen in den Reaktor miteinander vermischt werden. Dabei kann insbesondere vorgesehen sein, dass das CO2 in der wässrigen Flüssigkeit aufgelöst wird.

Bei einer Durchführung eines erfindungsgemäßen Verfahrens, bei dem das Material in dem Reaktor von der wässrigen Flüssigkeit und dem CO2 im Gegenstrom durchströmt wird, kann weiterhin bevorzugt vorgesehen sein, dass das CO2 dem Reaktor überdosiert, d.h. in einer Menge, die von dem in dem Reaktor enthaltenen Material während eines Durchlaufs nicht vollständig umgesetzt werden kann, zugeführt wird. Dadurch kann auch noch im Bereich des Materialeinlasses beziehungsweise des Gasauslasses CO2 in einem Umfang zur Verfügung stehen, der eine möglichst weitgehende Umsetzung des CO2 mit dem Zementstein gewährleistet. In diesem Fall ist es sinnvoll, dass ein Gasstrom des CO2 über den Gasauslass aus dem Reaktor entnommen und zu dem Reaktor rezirkuliert wird. Dadurch kann das in dem vorausgegangenen Durchlauf nicht umgesetzte CO2 erneut verwendet werden. Eine erfindungsgemäße Anlage kann hierfür eine entsprechende Gasrückführleitung umfassen.

Gemäß einer bevorzugten Ausführungsform eines erfindungsgemäßen Verfahrens, bei dem ein Rückführen einer Grobfraktion von der Klassiervorrichtung zu dem Reaktor erfolgt, kann vorgesehen sein, dass die Grobfraktion vor der Rückführung in den Reaktor in einer zweiten Zerkleinerungsvorrichtung zerkleinert wird. Dadurch kann die Größe der Flächen der Bruchstücke der Grobfraktion, die in dem Reaktor mit der wässrigen Flüssigkeit und dem CO2 in Kontakt gebracht wird, vergrößert werden.

Technisch einfach umsetzbar ist ein Austrag des Materials aus dem Reaktor zusammen mit einem Teil der wässrigen Flüssigkeit. Dementsprechend kann auch vorgesehen sein, dass die mindestens zwei Fraktionen aus einem Austragsstrom der wässrigen Flüssigkeit, der mit dem Material dem Reaktor entnommen wurde, separiert werden. Um den Verbrauch an wässriger Flüssigkeit gering zu halten, kann dann weiterhin bevorzugt vorgesehen sein, dass der von den Fraktionen befreite Austragsstrom der wässrigen Flüssigkeit zumindest teilweise in die Klassiervorrichtung und/oder zumindest teilweise in den Reaktor zurückgeführt wird.

Sofern mittels der Klassiervorrichtung exakt drei Fraktionen separiert werden, kann dann weiterhin bevorzugt vorgesehen sein, dass die Klassiervorrichtung eine zweistufige Siebvorrichtung umfasst, wobei in einer ersten Siebstufe die Grobfraktion und in einer zweiten Siebstufe die Mittelfraktion aus dem Austragsstrom der wässrigen Flüssigkeit mit den darin enthaltenen Bruchstücken des Materials separiert werden. Der Siebvorrichtung kann dann noch eine Separiervorrichtung nachgeschaltet sein, die beispielsweise in Form eines Hydrozyklons ausgebildet sein kann. In dieser Separiervorrichtung kann dann noch die Feinfraktion aus dem Austragsstrom der wässrigen Flüssigkeit separiert werden. Der Austragsstrom der wässrigen Flüssigkeit kann dann weitestgehend von dem Material befreit sein. Gegebenenfalls kann dem Hydrozyklon noch eine Filterpresse nachgeschaltet sein, mittels der die Feinfraktion weiter entwässert werden kann.

Durch die Behandlung in dem Reaktor kann im Wesentlichen nur eine Aufbereitung von mineralischen Bestandteilen des Materials erfolgen. Es kann demnach im Rahmen eines erfindungsgemäßen Verfahrens vorteilhaft sein, wenn dem Material vor dem Einbringen in den Reaktor nicht-mineralische, insbesondere metallische Bestandteile, wie sie in Betonrezyklaten insbesondere zur Bewehrung eingesetzt werden, entnommen werden. Dies kann vor und/oder nach dem Vorbrechen mittels der (ersten) Zerkleinerungsvorrichtung erfolgen. Eine erfindungsgemäße Anlage kann hierfür eine entsprechende Entnahmevorrichtung umfassen.

Die Erfindung wird nachfolgend anhand von in den Zeichnungen dargestellten Ausführungsbeispielen näher erläutert. In den Zeichnungen zeigt, jeweils in schematischer Darstellung:
- Fig. 1:: die Durchführung eines Verfahrens zum Aufbereiten von Material, das Zementstein enthält, und die dabei eingesetzte Anlage gemäß einer ersten Ausführungsform;
- Fig. 2:: die Durchführung eines Verfahrens zum Aufbereiten von Material, das Zementstein enthält, und die dabei eingesetzte Anlage gemäß einer zweiten Ausführungsform;
- Fig. 3:: die Durchführung eines Verfahrens zum Aufbereiten von Material, das Zementstein enthält, und die dabei eingesetzte Anlage gemäß einer dritten, erfindungsgemäßen Ausführungsform; und
- Fig. 4:: die Durchführung eines Verfahrens zum Aufbereiten von Material, das Zementstein enthält, und die dabei eingesetzte Anlage gemäß einer vierten, erfindungsgemäßen Ausführungsform.

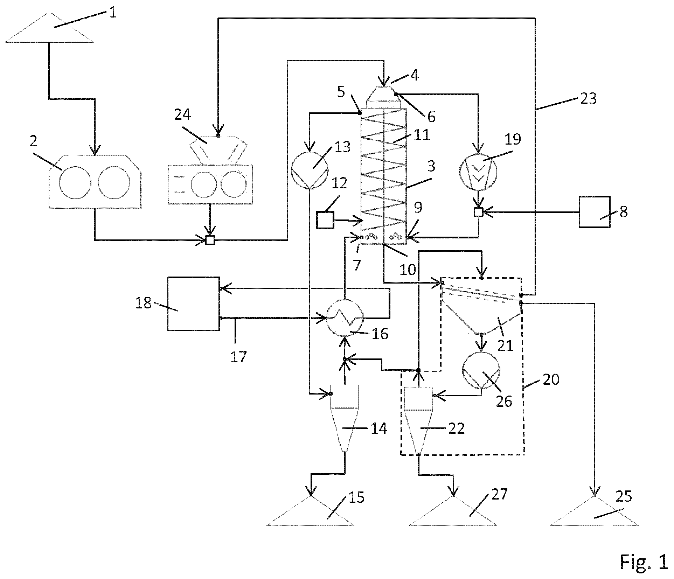

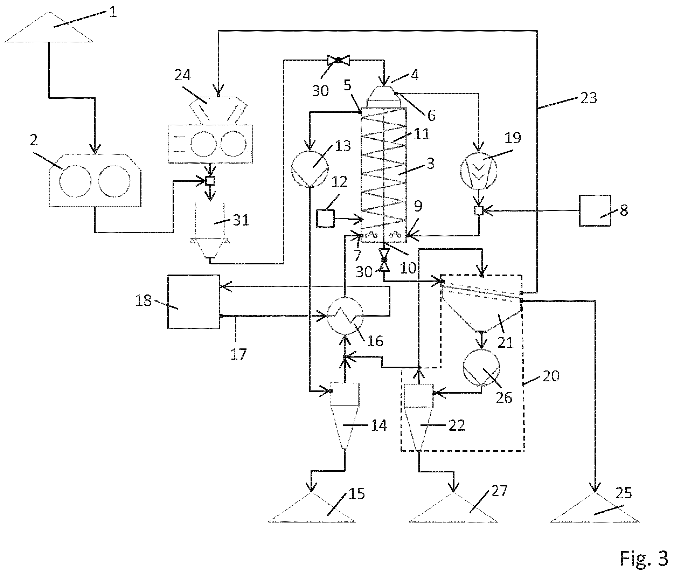

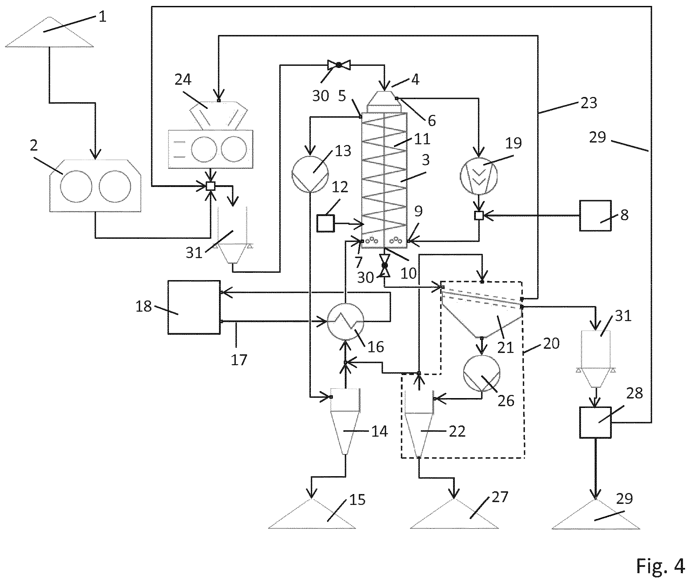

Die Fig. 1 bis 4 zeigen jeweils die Durchführung eines Verfahrens zum Aufbereiten von Material, das Zementstein enthält, sowie die dabei eingesetzte Anlage, wobei bei den Verfahren gemäß den Fig. 3 und 4 erfindungsgemäß ein Betrieb eines Reaktors 3 mit einem über dem Umgebungsdruck liegenden Druck vorgesehen ist und innerhalb des Reaktors 3 eine Temperatur eingestellt wird, die über 100°C liegt.

Bei der Durchführung eines solchen Verfahrens wird ein stückiges Material, bei dem es sich insbesondere um einen Betonrezyklat handeln kann, aus einem Lager 1 entnommen und einer ersten Zerkleinerungsvorrichtung 2 zugeführt, wobei das Material vor der Zuführung zu der ersten Zerkleinerungsvorrichtung 2 grob aufbereitet worden sein kann. Insbesondere können bei dieser Aufbereitung nicht-mineralische Bestandteile des Materials, beispielsweise metallische Bewehrungen des Betonrezyklats, entnommen worden sein. Auch bei dieser Aufbereitung kann bereits eine Zerkleinerung erfolgt beziehungsweise notwendig geworden sein, wobei vorgesehen sein kann, dass die Kantenlängen der dabei entstandenen Bruchstücke des Materials über 300 mm betragen können.

In der ersten Zerkleinerungsvorrichtung 2 wird das Material grob vorgebrochen, wobei die dabei entstehenden Bruchstücke Kantenlängen beziehungsweise größte Abmessungen aufweisen können, die bis zu 63 mm betragen können.

Das mittels der ersten Zerkleinerungsvorrichtung 2 vorgebrochene Material wird anschließend dem Reaktor 3 der Anlage zugeführt. Dieser ist in Form eines Vertikalreaktors, der insbesondere ein zylindrisches Reaktorgehäuse umfassen kann, ausgeführt. Der Reaktor 3 weist an einem ersten, oberen Ende des zylindrischen Reaktorgehäuses einen Materialeinlass 4 auf, über den das Material in den Reaktorinnenraum eingebracht werden kann. Dabei sollte für eine ausreichende Dichtheit im Bereich des Materialeinlasses 4 gesorgt sein, um ein Eintreten von Umgebungsluft über den Materialeinlass 4 möglichst weitgehend zu vermeiden. An diesem oberen Ende weist der Reaktor 3 weiterhin einen Flüssigkeitsauslass 5 zum Ausbringen von wässriger Flüssigkeit sowie einen (höher als der Flüssigkeitsauslass 5 gelegenen) Gasauslass 6 zum Ausbringen von (überdosiertem) CO2 auf. Die wässrige Flüssigkeit und das CO2 wurden über einen Flüssigkeitseinlass 7 sowie über einen mit einem CO2-Gasspeicher 8 verbundenen Gaseinlass 9, die an einem zweiten, unteren Ende des Reaktors 3 vorgesehen sind, in den Reaktorinnenraum eingebracht. An diesem unteren Ende weist der Reaktor 3 weiterhin einen Materialauslass 10 auf.

Material, das über den Materialeinlass 4 in den Reaktor 3 eingebracht worden ist, sinkt innerhalb des Reaktorinnenraums schwerkraftbedingt in Richtung des Materialauslasses 10 ab, wobei dieses im Gegenstrom von der wässrigen Flüssigkeit und dem CO2, die von den jeweiligen Einlässen 7, 9 an dem unteren Ende zu den jeweiligen Auslässen 5, 6 an dem oberen Ende des Reaktors 3 strömen, durchströmt wird.

Innerhalb des Reaktorinnenraums ist weiterhin eine Mischvorrichtung 11 angeordnet, die beispielsweise eine rotierend antreibbare Zentralwelle mit Mischelementen aufweisen kann. Die Mischvorrichtung 11 kann jedoch auch wellenlos oder in Form einer Mischschnecke ausgeführt sein. Weiterhin kann die Mischvorrichtung 11 auch in Form einer Mühle, beispielsweise einer Kugelmühle, vorgesehen sein, wobei dann im Vergleich zu einer konventionellen Kugelmühle, die primär einem Mahlen von Material dient, die Anzahl an Mahlkörpern deutlich geringer gewählt sein kann. Die Mischvorrichtung 11 hat die Funktion, eine permanente Relativbewegung der Bruchstücke des Materials zueinander sicherzustellen.

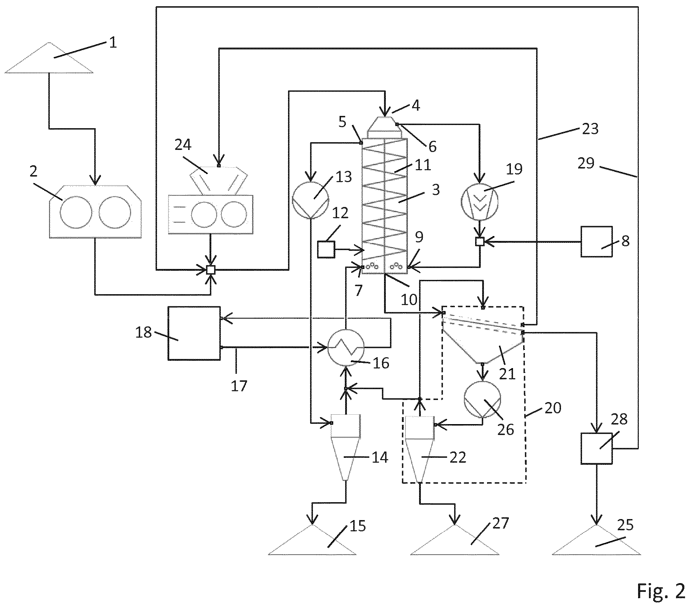

Während des Aufenthalts des Materials innerhalb des Reaktors 3 wird dieses infolge dieser Relativbewegungen weiter zerkleinert, wobei kontinuierlich neue Bruchflächen entstehen, die für eine Reaktion mit der wässrigen Flüssigkeit und dem CO2 zur Verfügung stehen. Weiterhin wird durch die Anwesenheit der wässrigen Flüssigkeit und des CO2 der in dem Material enthaltene Zementstein rekarbonatisiert. Die Prozessbedingungen sind dabei insbesondere über die Verweilzeit des Materials in dem Reaktor 3, über die Temperatur in dem Reaktor 3 (vorzugsweise zwischen 50°C und 100°C bei dem drucklosen Verfahren gemäß den Fig. 1 und 2) und über den pH-Wert in dem Reaktor 3, der mittels einer Eintragsvorrichtung 12 zum Einbringen eines basischen Zuschlagstoffs (z.B. NaOH) in den Reaktor beeinflussbar ist, einstellbar.

Durch den intensiven Kontakt zwischen den Bruchstücken des Materials während der Durchmischung in dem Reaktor 3 wird insbesondere auch ein sehr feinkörniger Abrieb erzeugt, der im Wesentlichen aus rekarbonatisiertem Zementstein besteht. Dieser Abrieb liegt im Wesentlichen in Form von Schwebepartikeln innerhalb der wässrigen Flüssigkeit vor und kann in vorteilhafter Weise über den Flüssigkeitsauslass 5 mitsamt eines Entnahmestroms der wässrigen Flüssigkeit aus dem Reaktor 3 abgeführt werden. Mittels einer Pumpe 13 wird dieser Entnahmestrom der wässrigen Flüssigkeit mit den darin enthaltenen Schwebepartikeln einer beispielsweise in Form eines Hydrozyklons ausgebildeten Separiervorrichtung 14 zugeführt. Mittels dieser Separiervorrichtung 14 wird der Abrieb aus dem Entnahmestrom der wässrigen Flüssigkeit separiert und in ein Produktlager 15 ausgeschleust. Dabei kann der Abrieb noch in Form einer Suspension vorliegen, der gegebenenfalls noch getrocknet beziehungsweise eingedickt werden kann (nicht dargestellt).

Da es sich bei dem Abrieb im Wesentlichen um sortenreinen Zementstein handeln kann, der zudem in einem relevanten Umfang rekarbonatisiert wurde, kann dieser in vorteilhafter Weise für eine Weiterverwendung geeignet sein. Dieser Zementstein-Abrieb kann chemisch Rohmehl, der für die Herstellung von Zementklinker verwendet wird, ähnlich sein und dann daher als sekundäres Rohmaterial bei einer solchen Herstellung von Zementklinker eingesetzt werden. Weil dieser Zementstein-Abrieb bereits deutlich feinkörniger als Rohmehl aus natürlichen Rohstoffen sein kann, kann bei einer Nutzung von diesem als sekundäres Rohmaterial Energie eingespart werden, die anderenfalls für die Mahlung von Rohmehl aus natürlichen Rohstoffen erforderlich wäre. Zudem müssten solche Rohstoffe dann in einem entsprechend verringerten Umfang abgebaut werden.

Der von dem Abrieb befreite Entnahmestrom der wässrigen Flüssigkeit wird als Rezirkulationsstrom über den Flüssigkeitseinlass 7 in den Reaktor 3 zurückgeführt. Dabei wird dieser vorab über einen Wärmetauscher 16 geführt, in dem ein Wärmeübergang auf diesen Entnahmestrom oder ein Wärmeübergang von diesem Entnahmestrom der wässrigen Flüssigkeit auf ein Temperiermedium (z.B. Wasser), das in einer Temperiervorrichtung 17 zirkuliert, bewirkt werden kann. In diese Temperiervorrichtung 17 ist weiterhin eine Wärmequelle oder Wärmesenke 18 integriert, um entweder Wärmeenergie bereitzustellen (z.B. Abwärme aus einem nahe gelegenen Zementwerk), die in dem Wärmetauscher 16 auf den Entnahmestrom der wässrigen Flüssigkeit übertragen werden kann, oder um Wärmeenergie, die von dem Entnahmestrom der wässrigen Flüssigkeit auf das Temperiermedium übertragen worden ist, abzuführen (z.B. mittels eines Umgebungswärmetauschers).

CO2, das an dem oberen Ende des Reaktors 3 und damit im Bereich des Gasauslasses 6 angekommen und folglich bei den innerhalb des Reaktors 3 erfolgenden Reaktionen nicht umgesetzt worden ist, wird mittels einer als Verdichter (z.B. Schraubenkompresser) oder Gebläse (z.B. Drehkolbengebläse) ausgebildeten Fördervorrichtung 19 zu dem Gaseinlass 9 rezirkuliert und folglich, bedarfsweise vermischt mit frischem CO2 aus dem CO2-Gasspeicher 8, wieder in den Reaktor 3 eingebracht. Dabei kann auch vorgesehen sein, zumindest einen Teil des CO2 mittels beispielsweise eines Einspritzkondensators stromab des Wärmetauschers 16 in den Entnahmestrom der wässrigen Flüssigkeit einzubringen und auf diesem Weg dem Reaktor 3 zuzuführen (nicht dargestellt). Eine Dosierung des CO2 und damit insbesondere der Umfang der Zumischung von CO2 aus dem CO2-Gasspeicher 8 in den rezirkulierten Gasstrom des CO2 kann vorzugsweise in Abhängigkeit von der Konzentration an CO2 im Bereich des Gasauslasses 6 eingestellt werden.

Das in dem Reaktor 3 behandelte Material wird zusammen mit einem Austragsstrom der wässrigen Flüssigkeit über den Materialauslass 10 aus dem Reaktor 3 abgeführt und einer Klassiervorrichtung 20 zugeführt, die u.a. eine zweistufige Siebvorrichtung 21 sowie eine der Siebvorrichtung 21 nachgeschaltete Separiervorrichtung 22, die wiederum in Form eines Hydrozyklons ausgebildet ist, umfasst.

In einer ersten Siebstufe der Siebvorrichtung 21 wird eine Grobfraktion des Materials, die Korngrößen aufweist, die größer als 16 mm sind, aus dem Austragsstrom separiert. Diese Grobfraktion wird über eine Materialrückführleitung 23 mit einer darin integrierten, zweiten Zerkleinerungsvorrichtung 24, die beispielsweise in Form einer Hochdruckrollenpresse ausgebildet sein kann, in den Strom des "frischen" Materials eingemischt und mit diesem gemeinsam in den Reaktor 3 (zurück-)geführt. Sofern das Material in einer Form vorliegt, die ermöglicht, dass dieses bereits nach dem Vorbrechen in der ersten Zerkleinerungsvorrichtung 2 hinsichtlich der Körnung und Zusammensetzung ausreichend konstant und homogen ist, kann gegebenenfalls auf die Rückführung der Grobfraktion verzichtet beziehungsweise der Anteil an zurückgeführter Grobfraktion kann nahezu null oder äußerst gering sein. Weiterhin besteht auch die Möglichkeit, die erste Zerkleinerungsvorrichtung 2 und die zweite Zerkleinerungsvorrichtung 24 integral auszubilden beziehungsweise dieselbe Zerkleinerungsvorrichtung zur Verkleinerung sowohl des von dem Lager 1 zugeführten Materials als auch der zurückgeführten Grobfraktion des Materials zu verwenden.

Eine Mittelfraktion des Materials, die Korngrößen aufweist, die größer als 2 mm (und kleiner als 16 mm) sind, wird mittels einer zweiten Siebstufe der Siebvorrichtung 21 aus dem Austragsstrom separiert und in ein Produktlager 25 ausgeschleust. Hierbei kann es sich insbesondere um im Wesentlichen vollständig von Zementstein befreite Gesteine, die insbesondere als Zuschlag des Betons vorgesehen waren, handeln. Infolge der Sortenreinheit können auch diese in vorteilhafter Weise unmittelbar wiederverwendet werden.

Eine Feinfraktion des Materials, deren Korngrößen kleiner als 2 mm sind, passieren die Siebvorrichtung 21 gemeinsam mit dem Austragsstrom der wässrigen Flüssigkeit und wird, gefördert mittels einer Pumpe 26, der Separiervorrichtung 22 der Klassiervorrichtung 20 zugeführt und mittels dieser aus dem Austragsstrom separiert. Auch diese Feinfraktion, bei der es sich insbesondere um weitgehend sortenreinen Sand handeln kann, kann in ein Produktlager 27 ausgeschleust und wiederverwendet werden.

Der von den Fraktionen befreite Austragsstrom der wässrigen Flüssigkeit wird teilweise zu einer Einlassseite der Siebvorrichtung 21 zurückgeführt, insbesondere auch um diese zu spülen, und teilweise dem Entnahme- beziehungsweise Rezirkulationsstrom der wässrigen Flüssigkeit zugemischt und zusammen mit diesem in den Reaktor 3 zurückgeführt.

Gegebenenfalls (beispielsweise in Abhängigkeit von dem konkret zu behandelnden Material beziehungsweise Betonrezyklat) kann es sinnvoll sein, die Mittelfraktion vor dem Ausschleusen noch hinsichtlich des Restgehalts an Zementstein zu analysieren, wozu eine Anlage gemäß der Fig. 2 eine entsprechende Analysevorrichtung 28 umfassen kann. Die Anlage und das damit durchgeführte Verfahren entsprechen ansonsten derjenigen und demjenigen gemäß der Fig. 1. Wird mittels der Analysevorrichtung 28 festgestellt, dass die Mittelfraktion (zeitweise) einen Anteil an Zementstein aufweist, der größer als ein hierfür definierter Grenzwert ist, kann vorgesehen sein, diesen Teil der Mittelfraktion über eine weitere Materialrückführleitung in den Reaktor 3 zurückzuführen. Alternativ zu der Ausführungsform gemäß der Fig. 2 kann dabei auch vorgesehen sein, auch diesen zurückgeführten Anteil der Mittelfraktion über die zweite Zerkleinerungsvorrichtung 24 zu führen, um diese vor dem Einbringen in den Reaktor 3 weiter zu zerkleinern.

Die erfindungsgemäßen Ausführungsformen von Verfahren zum Aufbereiten von Material, das Zementstein enthält, und die dabei eingesetzten Anlagen gemäß den Fig. 3 und 4 unterscheiden sich von denjenigen gemäß den Fig. 1 und 2 im Wesentlichen ausschließlich darin, dass gemäß den Fig. 3 und 4 ein Betrieb des Reaktors 3 mit einem über dem Umgebungsdruck liegenden Druck (vorzugsweise bis zu 500 mbar Überdruck) vorgesehen ist. Dadurch wird insbesondere auch ermöglicht, innerhalb des Reaktors 3 eine Temperatur einzustellen, die über 100°C liegt, ohne dass es dabei in einem großen Umfang zu einem Verdampfen der wässrigen Flüssigkeit kommt.

Für einen solchen druckaufgeladenen Betrieb des Reaktors 3 muss dieser zumindest hinsichtlich der Materialzufuhr und Materialabfuhr zeitweise isoliert beziehungsweise drucktechnisch abgetrennt werden, was gemäß den Fig. 3 und 4 durch die Integration entsprechender Absperrventile 30 bewirkt werden kann. Ein Einbringen von Material in den Reaktor 3 und auch ein Abführen des Materials aus dem Reaktor 3 kann dabei entweder nach einer Druckentlastung des Reaktors 3 erfolgen oder es sind im Bereich der Materialzufuhr und Materialabfuhr Druckschleusen 31, die auch ein relativ großes Zwischenspeichervolumen für das Material zur Verfügung stellen können, vorzusehen.

Bei einem druckaufgeladenen Betrieb des Reaktors 3 ist zu beachten, dass bei einem Ausschleusen von wässriger Flüssigkeit aus dem Reaktor 3 oder beim Öffnen einer Druckschleuse 31 schlagartig Wasserdampf austreten kann. Daher kann es sinnvoll sein, ein Überhöhen der Temperatur innerhalb des Reaktors 3 auf mehr als 100°C und ein Überhöhen des darin herrschenden Drucks auf Werte oberhalb des Umgebungsdrucks zyklisch durchzuführen, wobei zum Ende jedes Zyklus der Reaktor 3 druckentlastet sowie die Temperatur auf knapp unter 100°C abgesenkt werden. Hierzu kann insbesondere eine Kühlung des Entnahmestroms der wässrigen Flüssigkeit mittels des Wärmetauschers 16 vorgesehen sein. Weil der Reaktor 3 für den sich anschließenden Zyklus wieder aufgeheizt werden muss, könnte es in diesem Fall sinnvoll sein, den Wärmetauscher 16 rekuperativ auszubilden, wobei als Speichermasse zur Zwischenspeicherung von Wärmeenergie beispielsweise das in einer Druckschleuse 31 oder einem sonstigen Zwischenbunker gelagerte Material dienen kann. Dabei kann auch vorgesehen sein, einen solchen Zwischenbunker in Einzelsektionen zu unterteilen und die Wände und Zwischenwände eines solchen Zwischenbunkers derart auszuführen, dass diese von Temperiermedium der Temperiervorrichtung 17 durchströmt werden können, um einen möglichst guten Übergang von Wärmeenergie realisieren zu können. Als zusätzliches Regelglied für schnelle Temperiereingriffe kann sich auch eine hohlwandige Ausführung eines Unterturms der Siebvorrichtung 21 anbieten, wenn dieser von Temperiermedium durchströmbar wäre.

### Bezugszeichenliste:

- 1: Lager
- 2: erste Zerkleinerungsvorrichtung
- 3: Reaktor
- 4: Materialeinlass
- 5: Flüssigkeitsauslass
- 6: Gasauslass
- 7: Flüssigkeitseinlass
- 8: CO2-Gasspeicher
- 9: Gaseinlass
- 10: Materialauslass
- 11: Mischvorrichtung
- 12: Eintragsvorrichtung
- 13: Pumpe
- 14: Separiervorrichtung
- 15: Produktlager
- 16: Wärmetauscher
- 17: Temperiervorrichtung
- 18: Wärmequelle/Wärmesenke
- 19: Fördervorrichtung
- 20: Klassiervorrichtung
- 21: Siebvorrichtung
- 22: Separiervorrichtung
- 23: Materialrückführleitung
- 24: zweite Zerkleinerungsvorrichtung
- 25: Produktlager
- 26: Pumpe
- 27: Produktlager
- 28: Analysevorrichtung
- 29: Materialrückführleitung
- 30: Absperrventil
- 31: Druckschleuse

## Patentansprüche

1. Verfahren zum Aufbereiten von Material, das Zementstein enthält, wobei das Material in einer ersten Zerkleinerungsvorrichtung (2) zerkleinert und anschließend einem Reaktor (3) zugeführt wird, in dem das Material mit einer wässrigen Flüssigkeit und CO2 vermischt und in dem eine Mischungsbewegung des Materials erzeugt wird, wobei das aus dem Reaktor (3) entnommene Material mittels einer Klassiervorrichtung (20) in mindestens zwei Fraktionen, eine Grobfraktion und eine Mittelfraktion, aufgeteilt wird, wobei die Grobfraktion eine Korngröße größer als 16 mm aufweist, wobei die Mittelfraktion eine Korngröße zwischen 2 mm und 16 mm aufweist, wobei die Temperatur und der Druck in dem Reaktor (3) derart beeinflusst werden, dass ein Überdruck im Vergleich zu dem atmosphärischen Druck und eine Temperatur, die größer als 100°C ist, eingestellt werden, **dadurch gekennzeichnet, dass** von den mindestens zwei Fraktionen die Grobfraktion in den Reaktor (3) zurückgeführt wird, wobei die Grobfraktion vor der Rückführung in den Reaktor (3) in einer zweiten Zerkleinerungsvorrichtung (24) zerkleinert wird.

2. Verfahren gemäß Anspruch 1, **dadurch gekennzeichnet, dass** dem Reaktor (3) ein Entnahmestrom der wässerigen Flüssigkeit entnommen wird, wobei aus diesem Entnahmestrom Schwebepartikel des Materials separiert und ausgeschleust werden.

3. Verfahren gemäß Anspruch 2, **dadurch gekennzeichnet, dass** der Entnahmestrom nach der Separierung der Schwebepartikel als Rezirkulationsstrom in den Reaktor (3) zurückgeführt wird.

4. Verfahren gemäß einem der vorhergehenden Ansprüche, **dadurch gekennzeichnet, dass** das aus dem Reaktor (3) entnommene Material mittels der Klassiervorrichtung (20) in mindestens drei Faktionen aufgeteilt wird, von denen eine Feinfraktion und eine Mittelfraktion ausgeschleust werden.

5. Verfahren gemäß einem der vorhergehenden Ansprüche, **dadurch gekennzeichnet, dass** bei zwei Fraktionen die kleinere der Fraktionen oder bei mindestens drei Fraktionen die oder eine Mittelfraktion Korngrößen zwischen 2 mm und 16 mm aufweist.

6. Verfahren gemäß einem der vorhergehenden Ansprüche, **dadurch gekennzeichnet, dass** bei zwei Fraktionen die kleinere der Fraktionen oder bei mindestens drei Fraktionen die oder eine Mittelfraktion hinsichtlich des Gehalts an Zementstein analysiert wird.

7. Verfahren gemäß Anspruch 6, **dadurch gekennzeichnet, dass** die analysierte Fraktion in den Reaktor (3) zurückgeführt wird, wenn der ermittelte Gehalt an Zementstein größer als ein Grenzwert ist.

8. Verfahren gemäß einem der vorhergehenden Ansprüche, **dadurch gekennzeichnet, dass** in den Reaktor (3) ein basischer Zuschlagstoff eingebracht wird.

9. Verfahren gemäß einem der vorhergehenden Ansprüche, **dadurch gekennzeichnet, dass** das Material in dem Reaktor (3) von der wässrigen Flüssigkeit und dem CO2 im Gegenstrom durchströmt wird.

10. Verfahren gemäß einem der vorhergehenden Ansprüche, **dadurch gekennzeichnet, dass** die mindestens zwei Fraktionen aus einem Austragsstrom der wässrigen Flüssigkeit, der zusammen mit dem Material dem Reaktor (3) entnommen wurde, separiert werden.

11. Verfahren gemäß Anspruch 10, **dadurch gekennzeichnet, dass** der von den Fraktionen befreite Austragsstrom der wässrigen Flüssigkeit zumindest teilweise in die Klassiervorrichtung (20) und/oder zumindest teilweise in den Reaktor (3) zurückgeführt wird.

12. Verfahren gemäß einem der vorhergehenden Ansprüche, **dadurch gekennzeichnet, dass** ein Gasstrom des CO2 aus dem Reaktor (3) entnommen und zu dem Reaktor (3) rezirkuliert wird.

13. Verfahren gemäß einem der vorhergehenden Ansprüche, **dadurch gekennzeichnet, dass** dem Material vor dem Einbringen in den Reaktor (3) nicht-mineralische Bestanteile entnommen werden.

14. Anlage zur Aufbereitung von Material, das Zementstein enthält, mit
- einer (ersten) Zerkleinerungsvorrichtung (2) zur Zerkleinerung des Materials,
- einem materialführend mit der (ersten) Zerkleinerungsvorrichtung (2) verbundenen Reaktor (3), der eine Mischvorrichtung (11) umfasst,
- einer fluidleitend mit dem Reaktor (3) verbundenen Flüssigkeitszufuhr für eine wässrige Flüssigkeit,
- einer fluidleitend mit dem Reaktor (3) verbundenen Gaszufuhr für CO2,
- einer materialführend mit dem Reaktor (3) verbundenen Klassiervorrichtung (20) zum Aufteilen des aus dem Reaktor entnommenen Materials in mindestens zwei Fraktionen, die sich hinsichtlich der Korngröße unterscheiden, eine Grobfraktion und eine Mittelfraktion, wobei die Grobfraktion eine Korngröße größer als 16 mm aufweist, wobei die Mittelfraktion eine Korngröße zwischen 2 mm und 16 mm aufweist,
- einer Temperiervorrichtung (17) zur Beeinflussung einer Temperatur in dem Reaktor und
- einer Druckbeeinflussungsvorrichtung zur Beeinflussung eines Drucks in dem Reaktor
- eine Materialrückführleitung (23, 29) zum Rückführen zumindest einer der Fraktionen von der Klassiervorrichtung (20) zu dem Reaktor (3), wobei in die Materialrückführleitung (23) eine zweite Zerkleinerungsvorrichtung (24) integriert ist.

15. Anlage gemäß Anspruch 14, **gekennzeichnet durch**
- eine Analysevorrichtung (28) zur Analyse des Gehalts an Zementstein in zumindest einer der Fraktionen und/oder
- eine Eintragsvorrichtung (12) zum Einbringen eines basischen Zuschlagstoffs in den Reaktor (3) und/oder
- einen Materialeinlass (4), einen Flüssigkeitsauslass (5) und einen Gasauslass (6), die einem ersten Ende des Reaktors (3) zugeordnet sind, und einen Materialauslass (10), einen Flüssigkeitseinlass (7) und einen Gaseinlass (9), die einem zweiten Ende des Reaktors (3) zugeordnet sind und/oder
- den als Vertikalreaktor ausgebildeten Reaktor (3) und/oder
- eine Gasrückführleitung zum Rückführen von CO2 von einem/dem Gasauslass (6) zu einem/dem Gaseinlass (9) des Reaktors (3) und/oder
- eine Separiervorrichtung (14) zur Separierung von Schwebepartikeln aus einem aus dem Reaktor (3) abgeführten Entnahmestrom der wässrigen Flüssigkeit und/oder
- eine Entnahmevorrichtung zur Entnahme nicht-mineralischer Bestanteile des Materials vor dem Einbringen des Materials in den Reaktor (3).

## Claims

1. A method for processing material containing cement stone, wherein the material is crushed in a first crushing device (2) and subsequently fed to a reactor (3), in which the material is mixed with an aqueous liquid and CO2 and in which a mixing motion of the material is generated, wherein the material removed from the reactor (3) is divided by means of a classifier (20) into at least two fractions, a coarse fraction and a medium fraction, wherein the coarse fraction has a particle size greater than 16 mm, wherein the medium fraction has a particle size between 2 mm and 16 mm, wherein the temperature and pressure in the reactor (3) are controlled such that an overpressure relative to atmospheric pressure and a temperature greater than 100°C are established, **characterised in that**, of the at least two fractions, the coarse fraction is returned to the reactor (3), wherein the coarse fraction is comminuted in a second comminution device (24) prior to being returned to the reactor (3).

2. A method according to claim 1, **characterised in that** a withdrawal stream of the aqueous liquid is withdrawn from the reactor (3), wherein suspended particles of the material are separated from this withdrawal stream and discharged.

3. A method according to claim 2, **characterised in that** the withdrawal stream is returned to the reactor (3) as a recirculation stream after the separation of the suspended particles.

4. A method according to one of the preceding claims, **characterised in that** the material withdrawn from the reactor (3) is divided into at least three fractions by means of the classifier (20), of which a fine fraction and a medium fraction are discharged.

5. A method according to one of the preceding claims, **characterised in that**, in the case of two fractions, the smaller of the fractions, or in the case of at least three fractions, the or a medium fraction, has particle sizes between 2 mm and 16 mm.

6. A method according to one of the preceding claims, **characterised in that**, in the case of two fractions, the smaller of the fractions, or in the case of at least three fractions, the or a medium fraction, is analysed with regard to the content of cement stone.

7. A method according to claim 6, **characterised in that** the analysed fraction is returned to the reactor (3) if the determined cement stone content is greater than a threshold value.

8. A method according to one of the preceding claims, **characterised in that** a basic additive is introduced into the reactor (3).

9. A method according to one of the preceding claims, **characterised in that** the material in the reactor (3) is flowed through by the aqueous liquid and the CO₂ in counter-current.

10. A method according to one of the preceding claims, **characterised in that** the at least two fractions are separated from a discharge stream of the aqueous liquid which was removed from the reactor (3) together with the material.

11. A method according to claim 10, **characterised in that** the discharge stream of the aqueous liquid, from which the fractions have been removed, is at least partially returned to the classifier (20) and/or at least partially returned to the reactor (3).

12. A method according to one of the preceding claims, **characterised in that** a gas stream of CO₂ is withdrawn from the reactor (3) and recirculated to the reactor (3).

13. A method according to one of the preceding claims, **characterised in that** non-mineral constituents are removed from the material prior to introduction into the reactor (3).

14. Plant for processing material containing cement stone, comprising
- a (first) comminution device (2) for comminuting the material,
- a reactor (3) connected to the (first) crushing device (2) in a material-conveying manner, which comprises a mixing device (11),
- a liquid supply for an aqueous liquid, connected to the reactor (3) in a fluid-conducting manner,
- a gas supply for CO₂ connected to the reactor (3) via a fluid conduit,
- a classifier (20) connected to the reactor (3) for separating the material removed from the reactor into at least two fractions differing in particle size, a coarse fraction and a medium fraction , wherein the coarse fraction has a particle size greater than 16 mm, wherein the medium fraction has a particle size between 2 mm and 16 mm ,
- a temperature control device (17) for controlling a temperature in the reactor and
- a pressure control device for controlling a pressure in the reactor
- a material return line (23, 29) for returning at least one of the fractions from the classifier (20) to the reactor (3), wherein a second comminution device (24) is integrated into the material return line (23).

15. An apparatus according to claim 14, **characterised by**
- an analysis device (28) for analysing the cement paste content in at least one of the fractions and/or
- an introduction device (12) for introducing a basic additive into the reactor (3) and/or
- a material inlet (4), a liquid outlet (5) and a gas outlet (6) associated with a first end of the reactor (3), and a material outlet (10), a liquid inlet (7) and a gas inlet (9) associated with a second end of the reactor (3) and/or
- the reactor (3) designed as a vertical reactor and/or
- a gas recirculation line for recirculating CO₂ from one/the gas outlet (6) to one/the gas inlet (9) of the reactor (3) and/or
- a separation device (14) for separating suspended particles from a discharge stream of the aqueous liquid discharged from the reactor (3) and/or
- a removal device for removing non-mineral constituents of the material prior to introducing the material into the reactor (3).

## Revendications

1. Procédé de traitement d'un matériau contenant de la pâte de ciment, dans lequel le matériau est broyé dans un premier dispositif de broyage (2) puis acheminé vers un réacteur (3) dans lequel le matériau est mélangé à un liquide aqueux et à du CO2 et dans lequel un mouvement de mélange du matériau est généré, le matériau est divisé, à l'aide d'un dispositif de classification (20), en au moins deux fractions, une fraction grossière et une fraction moyenne, la fraction grossière présentant une granulométrie supérieure à 16 mm, la fraction moyenne présentant une granulométrie comprise entre 2 mm et 16 mm, la température et la pression dans le réacteur (3) sont régulées de manière à établir une surpression par rapport à la pression atmosphérique et une température supérieure à 100 °C, **caractérisé en ce que**, parmi les au moins deux fractions, la fraction grossière est renvoyée dans le réacteur (3), la fraction grossière étant broyée dans un deuxième dispositif de broyage (24) avant d'être renvoyée dans le réacteur (3).

2. Procédé selon la revendication 1, **caractérisé en ce qu'**un flux de prélèvement du liquide aqueux est prélevé du réacteur (3), les particules en suspension du matériau étant séparées de ce flux de prélèvement et évacuées.

3. Procédé selon la revendication 2, **caractérisé en ce que** le flux de prélèvement est renvoyé dans le réacteur (3) en tant que flux de recirculation après la séparation des particules en suspension.

4. Procédé selon l'une des revendications précédentes, **caractérisé en ce que** le matériau prélevé du réacteur (3) est divisé en au moins trois fractions à l'aide du dispositif de classification (20), parmi lesquelles une fraction fine et une fraction intermédiaire sont évacuées.

5. Procédé selon l'une des revendications précédentes, **caractérisé en ce que**, dans le cas de deux fractions, la plus petite des fractions ou, dans le cas d'au moins trois fractions, la fraction intermédiaire ou l'une des fractions intermédiaires présente des granulométries comprises entre 2 mm et 16 mm.

6. Procédé selon l'une des revendications précédentes, **caractérisé en ce que**, dans le cas de deux fractions, la plus petite des fractions, ou dans le cas d'au moins trois fractions, la fraction intermédiaire ou l'une des fractions intermédiaires, est analysée quant à sa teneur en pâte de ciment.

7. Procédé selon la revendication 6, **caractérisé en ce que** la fraction analysée est renvoyée dans le réacteur (3) lorsque la teneur en pâte de ciment déterminée est supérieure à une valeur limite.

8. Procédé selon l'une des revendications précédentes, **caractérisé en ce qu'**un agrégat basique est introduit dans le réacteur (3).

9. Procédé selon l'une des revendications précédentes, **caractérisé en ce que** le matériau dans le réacteur (3) est traversé à contre-courant par le liquide aqueux et le CO2.

10. Procédé selon l'une des revendications précédentes, **caractérisé en ce que** les au moins deux fractions sont séparées d'un flux de sortie du liquide aqueux qui a été prélevé du réacteur (3) avec le matériau.

11. Procédé selon la revendication 10, **caractérisé en ce que** le flux de sortie du liquide aqueux, débarrassé des fractions, est renvoyé au moins en partie vers le dispositif de classification (20) et/ou au moins en partie vers le réacteur (3).

12. Procédé selon l'une des revendications précédentes, **caractérisé en ce qu'**un flux gazeux de CO₂ est prélevé du réacteur (3) et recyclé vers le réacteur (3).

13. Procédé selon l'une des revendications précédentes, **caractérisé en ce que** les composants non minéraux sont retirés du matériau avant son introduction dans le réacteur (3).

14. Installation de traitement de matériaux contenant de la pâte de ciment, comprenant
- un (premier) dispositif de broyage (2) destiné à broyer le matériau,
- un réacteur (3) relié au (premier) dispositif de broyage (2) de manière à acheminer le matériau, lequel réacteur comprend un dispositif de mélange (11),
- une alimentation en liquide, reliée au réacteur (3) par un circuit de fluide, pour un liquide aqueux,
- une alimentation en gaz pour le CO₂, reliée au réacteur (3) par une conduite de fluide,
- un dispositif de classification (20) relié au réacteur (3) par une conduite de matière pour séparer le matériau prélevé du réacteur en au moins deux fractions qui se distinguent par leur granulométrie, une fraction grossière et une fraction intermédiaire , la fraction grossière présentant une granulométrie supérieure à 16 mm, la fraction intermédiaire présentant une granulométrie comprise entre 2 mm et 16 mm ,
- un dispositif de régulation de température (17) destiné à réguler la température dans le réacteur et
- un dispositif de régulation de pression pour réguler la pression dans le réacteur
- une conduite de recyclage de matière (23, 29) pour recycler au moins l'une des fractions du dispositif de classification (20) vers le réacteur (3), un deuxième dispositif de broyage (24) étant intégré dans la conduite de recyclage de matière (23).

15. Installation selon la revendication 14, **caractérisée par**
- un dispositif d'analyse (28) destiné à analyser la teneur en pâte de ciment dans au moins l'une des fractions et/ou
- un dispositif d'alimentation (12) destiné à introduire un adjuvant basique dans le réacteur (3) et/ou
- une entrée de matière (4), une sortie de liquide (5) et une sortie de gaz (6) associées à une première extrémité du réacteur (3), et une sortie de matière (10), une entrée de liquide (7) et une entrée de gaz (9) associées à une deuxième extrémité du réacteur (3) et/ou
- le réacteur (3) conçu comme un réacteur vertical et/ou
- une conduite de recyclage de gaz pour recycler le CO₂ depuis une/la sortie de gaz (6) vers une/la entrée de gaz (9) du réacteur (3) et/ou
- un dispositif de séparation (14) destiné à séparer les particules en suspension d'un flux de prélèvement du liquide aqueux évacué du réacteur (3) et/ou
- un dispositif de prélèvement destiné à prélever les composants non minéraux du matériau avant l'introduction de celui-ci dans le réacteur (3).
